# EUROPÄISCHE PATENTSCHRIFT

(11) **EP 2 690 631 B1**
(45) Veröffentlichungstag und Bekanntmachung des Hinweises auf die Patenterteilung: **05.10.2016**
(21) Anmeldenummer: 13173643.1
(22) Anmeldetag: 25.06.2013
(51) Int. Cl.: G21F 9/04, G21F 9/28, B24C 1/00, G21F 9/06, G21F 9/30, B24C 9/00, G21F 9/22, G21F 9/34, G21D 1/00

(54) **Anlage zum Behandeln eines beim Wasser- Abrasivmittel-Suspension-Strahlschneiden in einer nukleartechnischen Anlage anfallenden Gemisches aus Wasser und Feststoff**
Installation for the treatment of a mixture of water and solid material from water abrasive jet cutting in a nuclear facility
Installation de traitement d'un mélange d'eau et de solide survenant dans une installation nucléaire lors de la coupe à jet de suspension d'eau abrasive

(30) Priorität: 27.07.2012 DE 102012213295; 21.08.2012 DE 102012214853
(43) Veröffentlichungstag der Anmeldung: 29.01.2014
(73) Patentinhaber: AREVA GmbH, 91052 Erlangen (DE)
(72) Erfinder: Meierl, Hans-Peter, 91369 Wiesenthau (DE)
(74) Vertreter: Meissner Bolte Partnerschaft mbB

(56) Entgegenhaltungen:
- EP-A- 0 158 743
- DE-A1-102005 016 754
- JP-A- H0 192 696
- US-B1- 6 197 188

## Beschreibung

Die Erfindung bezieht sich auf eine Anlage zum Behandeln eines beim Wasser-Abrasivmittel-Suspension-Strahlschneiden in einer nukleartechnischen Anlage anfallenden Gemisches aus Wasser und einem Feststoff.

Zum Zerlegen von radioaktiv kontaminierten oder aktivierten Bauteilen einer nukleartechnischen Anlage ist es bekannt, ein sogenanntes Wasser-Abrasivmittel-Suspension-Strahlverfahren (WASS) einzusetzen, bei dem eine Suspension aus Wasser und Abrasivmittel mit hoher Geschwindigkeit auf das Bauteil gerichtet wird. Dabei entsteht beim Schneiden ein Gemisch aus Wasser und Feststoffen, die aus dem Abrasivmittel und dem beim Schneiden entstehenden radioaktiv kontaminierten oder aktivierten Schnittfugenmaterial bestehen. Durch das mitgenommene Schnittfugenmaterial ist dieses Gemisch dementsprechend radioaktiv belastet und muss daher unter Einhaltung von Sicherheitsmaßnahmen entsorgt werden. Da das Gemisch in einer sehr großen Menge anfällt - beim Zerlegen eines Reaktordruckbehälters liegt allein der Feststoffanteil (hauptsächlich Abrasivmittel) in der Größenordnung von etwa 50to, wobei die zum Schneiden benötigte Wassermenge in der Größenordnung von etwa 500 m³ liegt -, kann es unter wirtschaftlichen Gesichtspunkten nicht ohne weitere Nachbehandlung einem Endlager zugeführt werden. Da im Wesentlichen nur das im Gemisch enthaltene Schnittfugenmaterial radioaktiv belastet ist und da der größte Volumenanteil, das als Transportmittel verwendete Wasser ist, werden deshalb Feststoff und Wasser voneinander getrennt, so dass nur noch der im Gemisch enthaltene Feststoff in endlagerfähige Transportbehälter eingebracht und in das Endlager überführt werden muss. Die hierzu erforderlichen Behandlungsschritte sind jedoch aufwendig und erfordern ein regelmäßiges Unterbrechen des Strahlschneidens, so dass sich das Zerlegen großer Komponenten über entsprechend große Zeiträume erstreckt, in denen vor Ort Bedienpersonal und Geräte bereitgehalten werden müssen.

Anlagen, die zum Behandeln eines beim Wasser-Abrasivmittel-Suspension-Strahlschneiden anfallenden Gemisches aus Wasser und Feststoffen geeignet sind, sind beispielsweise aus EP 0 158 743 A1, DE 10 2005 016 754 A1, US 6,197,188 B1 und JP H01 92696 A bekannt. Derartige Anlagen weisen für gewöhnlich eine Zufuhrleitung zum Zuführen des Abrasiv-Partikel enthaltenden Gemisches auf.

Der Erfindung liegt daher die Aufgabe zugrunde, eine Anlage zum Behandeln eines beim Wasser-Abrasivmittel-Suspension-Strahlschneiden in einer nukleartechnischen Anlage anfallenden Gemisches aus Wasser und Feststoffen anzugeben, bei der der zeitliche Aufwand verringert ist.

Die Aufgabe wird gemäß der Erfindung gelöst mit einer Anlage mit den Merkmalen des Patentanspruches 1. Gemäß diesen Merkmalen umfasst die Anlage eine Zufuhrleitung zum Zuführen des beim Wasser-Abrasivmittel-Suspension-Strahlschneiden anfallenden Gemisches an eine Mehrzahl von zueinander parallelgeschalteten, jeweils über ein Ventil an die Zufuhrleitung angeschlossenen Ausgangsleitungen, wobei jede Ausgangsleitung an einen nur dieser zugeordneten, mit einem Filter versehenen Behälter angeschlossen ist, und wobei jeder Behälter an eine nur ihm zugeordnete Pumpstation zum Absaugen des durch das Filter hindurchtretenden Wassers angeschlossen ist.

Durch diese Maßnahmen ist es möglich, die Anlage kontinuierlich, d.h. ohne Unterbrechung zu betreiben, da die einzelnen Behälter unabhängig voneinander an die Zufuhrleitung angeschlossen oder von dieser getrennt werden können, so dass ein mit Feststoff gefüllter Behälter von der Zufuhrleitung getrennt und problemlos durch einen leeren Behälter ersetzt werden kann, da noch vor dem Entnehmen des vollen Behälters zumindest ein weiterer noch aufnahmefähiger Behälter bereits zugeschaltet ist oder zugeschaltet werden kann, der das kontinuierlich anfallende Gemisch aufnehmen kann. Da volle Behälter problemlos gegen leere Behälter ausgetauscht werden können, reicht es aus, relativ kleinvolumige und dementsprechend leicht zu transportierende Behälter zu verwenden, so dass der Platzbedarf für die gesamte Anlage entsprechend gering und deren Aufbau in vorhandenen Gebäudekomplexen der nukleartechnischen Anlage möglich ist.

Wenn außerdem als Behälter ein endlagerfähiges Fass vorgesehen ist, das gemeinsam mit dem darin eingesetzten Filter einem Endlager zugeführt werden kann, werden der Trennvorgang und die Einbringung der radioaktiv belasteten Feststoffe in einen Transportbehälter in einem einzigen Arbeitsschritt durchgeführt. Auf diese Weise ist der technische Aufwand verringert, da die Notwendigkeit entfällt, die in einer Abscheideranlage anfallenden Feststoffe nach dem Trennvorgang in ein endlagerfähiges Gebinde umzusetzen.

In einer besonders vorteilhaften Ausgestaltung der Erfindung ist an die Zufuhrleitung eine Puffereinheit mit einem Pufferbehälter zum temporären Aufnehmen des Gemisches angeschlossen. Dadurch kann das Schneidverfahren auch dann fortgeführt werden, wenn die Aufnahmekapazitäten aller Behälter erschöpft sind, so dass erst nach Austausch zumindest eines der Behälter ein Behälter verfügbar ist, der in der Lage ist, das kontinuierlich anfallende Gemisch aufzunehmen.

Weitere vorteilhafte Ausgestaltungen der Erfindung sind in den weiteren untergeordneten Patentansprüchen angegeben.

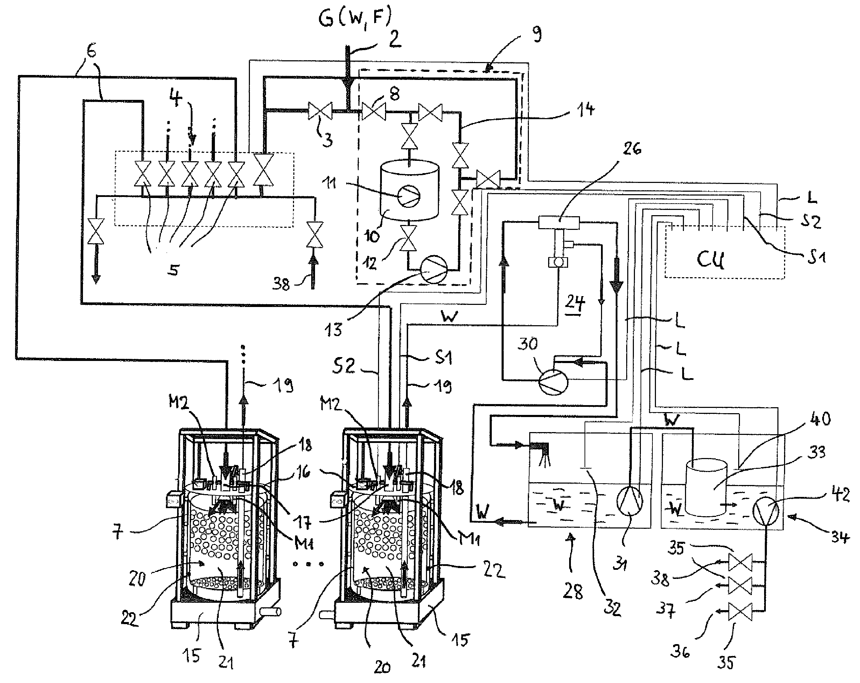

Zur näheren Erläuterung der Erfindung wird auf das in der einzigen Figur dargestellte Ausführungsbeispiel verwiesen, in der eine Anlage gemäß der Erfindung schematisch in einem Prinzipbild veranschaulicht ist.

Gemäß der Figur umfasst die Anlage eine Zufuhrleitung 2 zum Zuführen einer beim Wasserstrahl-Abrasivmittel-Suspension-Strahlschneiden anfallenden und aus Wasser W und Feststoffen F bestehenden Suspension bzw. eines Gemisches G über ein Ventil 3 zu einer Verteilerstation 4. In dieser Verteilerstation 4 sind an die Zufuhrleitung 2 jeweils über ein Ventil 5 eine Mehrzahl von parallel zueinander geschalteten Ausgangsleitungen 6 angeschlossen, wobei jede Ausgangsleitung 6 in einen aufrecht stehenden, im wesentlichen zylindrischen Behälter 7 mündet, bei dem es sich um ein zur Endlagerung geeignetes Fass, im Beispiel ein Rollreifenfass mit einem Volumen von 2001 handelt. Mit der Verteilerstation 4 können wahlweise ein oder mehrere Behälter 7 durch Öffnen der jeweiligen Ventile 5 an die Zufuhrleitung 2 angeschlossen werden. Bei dem Zerlegen eines Reaktordruckbehälters hat sich eine Anlage mit 5 derartigen Behältern 7 als geeignet erwiesen, um das kontinuierlich anfallende Gemisch G unterbrechungsfrei durch Schließen des zu einem vollen Behälter 7 führenden Ventils 5 und Öffnen des zu einem leeren Behälter 7 führenden Ventils 5 aufnehmen zu können. Der volle Behälter 7 wird dann durch einen leeren Behälter 7 ersetzt und steht dann zum Zuschalten zur Verfügung, wenn ein anderer Behälter 7 voll ist. Aus Gründen der Übersichtlichkeit sind in der Figur nur zwei Behälter 7 und nur für einen der Behälter 7 die komplette Leitungsführung dargestellt.

An die Zufuhrleitung 2 ist über ein Ventil 8 eine Puffereinheit 9 angeschlossen, die bei geschlossenem Ventil 3 zur temporären Aufnahme des Gemisches G dient, wenn die Menge des anfallenden Gemisches G zu hoch ist, um dieses unmittelbar in die vorhandenen Behälter 7 einleiten zu können. Die Pufferstation 9 umfasst hierzu einen Pufferbehälter 10, in dem sich eine Umwälzpumpe 11 befindet, mit der das Gemisch innerhalb des Pufferbehälters 10 umgewälzt, d.h. fortwährend in Bewegung gehalten wird. Über ein Ventil 12 ist der Pufferbehälter 10 an eine Ausgangsleitung 14 geschaltet, über die bei geöffnetem Ventil 12 das im Pufferbehälter 10 befindliche Gemisch G der Verteilerstation 4 mit Hilfe einer Kreiselpumpe 13 zugeführt werden kann.

Die Behälter 7 stehen jeweils auf einem Gitterrost über einem Überlaufbecken 15, mit dem ggf. überlaufendes Gemisch G aufgefangen werden kann.

Jeder Behälter 7 ist mit einem abnehmbaren Deckel 16 verschlossen, der mit einem Anschluss zum Anschließen einer der Ausgangsleitungen 6 an eine in den Behälter 7 mündende Durchführung 17 sowie mit einem Anschluss zum Anschließen einer Ansaugleitung 19 an ein in den Behälter 7 mündendes, bis zum Boden reichendes Saugrohr 18 versehen ist.

In die Behälter 7 sind aus einem Edelstahllochblech angefertigte doppelwandige Filterkörbe 20 eingesetzt, durch die der Behälter 7 in eine innere Einlasskammer 21 und eine diese umgebende ringförmige äußere Auslasskammer 22 aufgeteilt ist.

In den doppelwandigen Filterkorb 20 ist ein wasserdurchlässiges Filter, beispielsweise ein aus Edelstahlmaschengewebe bestehendes Filter, eingelegt, das für die Feststoffe F undurchlässig ist.

Das in die äußere Auslasskammer 22 mündende Saugrohr 18 ist über die Ansaugleitung 19 an eine Pumpstation 24 angeschlossen, in der das in der äußeren Auslasskammer 22 befindliche und durch das Filter hindurchgetretene Wasser W mit einer Wasserstrahlpumpe 26 angesaugt und in ein erstes Sammelbecken 28 eingeleitet wird, aus dem mit einer Kreiselpumpe 30 das zum Betreiben der Wasserstrahlpumpe 26 notwendige Wasser W entnommen wird.

Am Deckel 16 des Behälters 7 ist ein Füllstandssensor M1, im Beispiel ein Vibrationsgrenzschalter, angeordnet, der in die innere Einlasskammer 21 hineinragt und ein Signal S1 erzeugt, wenn die innere Einlasskammer 21 mit Feststoffen, deren Hauptanteil durch das Abrasivmittel gebildet ist, gefüllt ist.

Am Deckel 16 ist außerdem ein Schwimmerschalter M2 angeordnet, der ein Signal S2 erzeugt, wenn das im Behälter 7 befindliche Wasser W den Deckel 16 erreicht. Die Signale S1, S2 werden an eine Steuereinrichtung CU weitergeleitet, die über schematisch für einige der Komponenten dargestellte Steuerleitungen L die Anlage steuert.

In beiden Fällen wird ein zu einem anderen Behälter 7 gehörendes Ventil 5 geöffnet und das dem jeweils vollen Behälter 7 zugeordnete Ventil 5 geschlossen, um den Reinigungsprozess unterbrechungsfrei fortführen zu können.

Um einen gleichzeitigen Parallelbetrieb mehrerer Behälter 7 zu ermöglichen, beispielsweise dann, wenn der momentan an die Zufuhrleitung 2 angeschlossene Behälter 7 das zugeführte Gemisch G nicht mehr aufnehmen kann, weil sich beispielsweise der Behälter 7 mit Wasser W gefüllt hat, obwohl er noch Feststoffe F aufnehmen könnte, ist jeder der Behälter 7 über die an ihm angeschlossene Ansaugleitung 19 an eine nur ihm zugeordnete separate Pumpstation 24 angeschlossen, die in der Figur aus Gründen der Übersichtlichkeit nur für den rechten Behälter 7 eingezeichnet ist.

Das aus den Behältern 7 abgesaugte und sich im ersten Sammelbecken 28 sammelnde und ggf. noch restliche Feststoffe F enthaltende Wasser W wird mit Hilfe einer Pumpe 31, im Beispiel eine Tauchpumpe, abgesaugt. Die Pumpe 31 wird mit einem Schwimmerschalter 32 eingeschaltet, wenn im ersten Sammelbecken 28 ein maximaler Füllstand erreicht wird.

Die Pumpe 31 ist ausgangsseitig zur Feinfiltration an einen weiteren Filterbehälter 33 angeschlossen. Der Filterbehälter 33 befindet sich in einem zweiten Sammelbecken 34. Bei dem Filterbehälter 33 handelt es sich um einen Primärbehälter mit einem Lochblechboden, in dem ein Filterkorb eingebracht ist, in dem sich eine Mehrzahl von nebeneinander angeordneten hohlzylindrischen Filterkerzen befinden, in die das in den Filterbehälter 33 einströmende Wasser W eingeleitet wird. In den Filterkerzen werden sich ggf. noch im Wasser W befindliche feinkörnige Feststoffe F herausgefiltert. Das aus dem Filterbehälter 33 in das zweite Sammelbecken 34 austretende, durch Feinfiltration nachgereinigte Wasser W enthält dann nur noch Partikel mit einer Teilchengröße < 2µm.

Das im zweiten Sammelbecken 34 befindliche Wasser wird über eine von einem Schwimmerschalter 40 geschaltete Pumpe 42, im Beispiel ebenfalls eine Tauchpumpe, abgesaugt, die ausgangsseitig über eine Ventilanordnung 35 wahlweise mit einer in den Abwasserkreislauf der nukleartechnischen Anlage mündenden Leitung 36, mit einer Leitung 37 zum Spülen der Schneidmodule oder mit einer an die Verteilerstation 4 angeschlossenen Leitung 38 zum Spülen nur der Verteilerstation 4 oder der gesamten Strecke zwischen Verteilerstation 4 und dem ersten Sammelbecken 28 verbunden ist.

Der Füllgrad der Filterkerzen wird durch Messen der Druckdifferenz zwischen dem Einlass und dem Auslass des Wassers W aus dem Filterbehälter 33 erfasst. Übersteigt die Druckdifferenz einen vorgegebenen Wert, sind die Filterkerzen voll und müssen gewechselt werden. Sie werden dann gemeinsam mit dem Filterbehälter 33 entnommen, getrocknet und anschließend mit dem Filterbehälter 33 in einen zum Überführen in ein Endlager vorgesehenen Transportbehälter, bei dem es sich ebenfalls um ein Rollreifenfass handelt, eingebracht.

## Patentansprüche

1. Anlage zum Behandeln eines beim Wasser-Abrasivmittel-Suspension-Strahlschneiden in einer nukleartechnischen Anlage anfallenden Gemisches (G) aus Wasser (W) und Feststoffen (F), mit einer Zufuhrleitung (2) zum Zuführen des beim Wasser-Abrasivmittel-Suspension-Strahlschneiden anfallenden Gemisches (G), **gekennzeichnet durch** eine Mehrzahl von zueinander parallelgeschalteten, jeweils über ein Ventil (5) an die Zufuhrleitung (2) angeschlossenen Ausgangsleitungen (6), wobei jede Ausgangsleitung (6) an einen nur dieser zugeordneten, mit einem Filter (20) versehenen Behälter (7) angeschlossen ist, und wobei jeder Behälter (7) an eine nur ihm zugeordnete Pumpstation (24) zum Absaugen des **durch** das Filter hindurchtretenden Wassers (W) angeschlossen ist.

2. Anlage nach Anspruch 1, bei der den Pumpstationen (24) auslassseitig ein gemeinsames erstes Sammelbecken (28) zum Einleiten des von den Pumpstationen (24) angesaugten Wassers (W) zugeordnet ist.

3. Anlage nach Anspruch 1 oder 2, bei der zum Absaugen des Wassers (W) aus dem Behälter (7) eine Wasserstrahlpumpe (26) vorgesehen ist.

4. Anlage nach einem der vorhergehenden Ansprüche, bei der als Behälter (7) ein endlagerfähiges Fass vorgesehen ist, das gemeinsam mit dem darin eingesetzten Filter (20) einem Endlager zugeführt werden kann.

5. Anlage nach einem der Ansprüche 2 bis 4, bei dem zum Absaugen des Wassers (W) aus dem ersten Sammelbecken (28) eine Pumpe (31) vorgesehen ist, die ausgangsseitig an einen Filterbehälter (33) zur Feinfiltration angeschlossen ist, der das durch ihn hindurchtretende Wasser (W) in ein zweites Sammelbecken (34) leitet.

6. Anlage nach Anspruch 5, bei der das zweite Sammelbecken (34) über eine Pumpe (42) und eine Ventilanordnung (35) an den Abwasserkreislauf der nukleartechnischen Anlage angeschlossen ist.

7. Anlage nach Anspruch 5 oder 6, bei der das zweite Sammelbecken (34) über eine Pumpe (42) und eine Ventilanordnung (35) an eine Verteilerstation (4) für die Ausgangsleitungen (6) angeschlossen ist.

8. Anlage nach einem der vorhergehenden Ansprüche, bei der an die Zufuhrleitung (2) eine Puffereinheit (9) mit einem Pufferbehälter (10) zum temporären Aufnehmen des Gemisches (G) angeschlossen ist.

9. Anlage nach Anspruch 8, bei der in dem Pufferbehälter (10) eine Umwälzpumpe (11) zum Umwälzen des Gemisches (G) innerhalb des Pufferbehälters (10) angeordnet ist.

## Claims

1. System for treating a mixture (G) of water (W) and solids (F) accruing during jet cutting with a suspension of water and abrasive material in a nuclear plant, having a supply line (2) for supplying the mixture (G) accruing during jet cutting with a suspension of water and abrasive material, **characterised by** a plurality of outlet lines (6) connected in parallel to one another and connected to the supply line (2) via a valve (5), wherein each outlet line (6) is connected to a container (7) allocated only to this and provided with a filter (20), and wherein each container (7) is connected to a pump station (24) allocated only to it for vacuuming the water (W) passing through the filter.

2. System according to claim 1, in which a mutual first collecting basin (28) is allocated to the pump stations (24) on the outlet side for introducing the water (W) vacuumed by the pump stations (24).

3. System according to claim 1 or 2, in which a water jet pump (26) is provided for vacuuming the water (W) from the container (7).

4. System according to one of the preceding claims, in which a drum capable of final storage is provided as the container (7), said drum being able to be supplied to an end store together with the filter (20) inserted therein.

5. System according to one of claims 2 to 4, in which a pump (31) is provided for vacuuming the water (W) from the first collecting basin (28), said pump being connected to a filter container (33) on the output side for fine filtration, said filter container leading the water (W) passing through it into a second collecting basin (34).

6. System according to claim 5, in which the second collecting basin (34) is connected to the wastewater circuit of the nuclear plant via a pump (42) and a valve assembly (35).

7. System according to claim 5 or 6, in which the second collecting basin (34) is connected to a distributor station (4) for the outlet lines (6) via a pump (42) and a valve assembly (35).

8. System according to one of the preceding claims, in which a buffer unit (9) having a buffer container (10) for temporarily receiving the mixture (G) is connected to the supply line (2).

9. System according to claim 8, in which a circulating pump (11) is arranged in the buffer container (10) for circulating the mixture (G) within the buffer container (10).

## Revendications

1. Installation pour le traitement d'un mélange (G) d'eau (W) et de substances solides (F) produit dans une installation nucléaire lors la coupe par jet d'une suspension d'eau et d'abrasif, comportant une conduite d'acheminement (2) pour l'acheminement du mélange (G) produit lors la coupe par jet d'une suspension d'eau et d'abrasif, **caractérisée par** une pluralité de conduites de sortie (6) parallèles entre elles et raccordées chacune à la conduite d'acheminement (2) par une soupape (5), chaque conduite de sortie (6) étant raccordée à un réservoir (7) qui lui est uniquement affecté et doté d'un filtre (20) et chaque réservoir (7) étant raccordé à une station de pompage (24) qui lui est uniquement affectée et destinée à l'aspiration de l'eau (W) traversant le filtre.

2. Installation selon la revendication 1, dans laquelle un premier bassin collecteur commun (28), destiné à conduire l'eau (W) aspirée par les stations de pompage (24), est affecté, côté sortie, aux stations de pompage (24).

3. Installation selon la revendication 1 ou la revendication 2, dans laquelle une pompe à jet d'eau (26) est prévue pour aspirer l'eau (W) hors du réservoir (7).

4. Installation selon l'une quelconque des revendications précédentes, dans laquelle le réservoir (7) est un fût destiné au stockage ultime qui peut être acheminé vers un lieu de stockage ultime en même temps que le filtre (20) se trouvant à l'intérieur.

5. Installation selon l'une quelconque des revendications 2 à 4, dans laquelle une pompe (31) est prévue pour aspirer l'eau (W) hors du premier bassin collecteur (28) et raccordée, côté sortie, à un réservoir de filtrage (33) pour filtration fine qui conduit l'eau (W) qui le traverse dans un deuxième bassin de collecte (34).

6. Installation selon la revendication 5, dans laquelle le deuxième bassin de collecte (34) est raccordé au circuit d'eaux usées de l'installation nucléaire au moyen d'une pompe (42) et d'un ensemble de soupapes (35).

7. Installation selon la revendication 5 ou la revendication 6, dans laquelle le deuxième bassin de collecte (34) est raccordé à une station de répartition (4) destinée aux conduites de sortie (6) au moyen d'une pompe (42) et d'un ensemble de soupapes (35).

8. Installation selon l'une quelconque des revendications précédentes, dans laquelle une unité tampon (9) comportant un réservoir tampon (10), destiné à recevoir temporairement le mélange (G), est raccordée à la conduite d'acheminement (2).

9. Installation selon la revendication 8, dans laquelle une pompe de recirculation (11), destinée à la recirculation du mélange (G) à l'intérieur du réservoir tampon (10), est disposée à l'intérieur de ce dernier (10).
